# EUROPEAN PATENT APPLICATION

(11) **EP 4 538 037 A1**
(43) Date of publication of application: **16.04.2025**
(21) Application number: 23849760.6
(22) Date of filing: 09.06.2023
(51) Int. Cl.: B32B 27/28, B29C 55/02

(54) **STRETCHED FILM AND METHOD FOR PRODUCING SAME**

(30) Priority: 05.08.2022 JP 2022125629
(71) Applicant: C.I. TAKIRON Corporation, Kita-Ku Osaka-Shi Osaka 530-0001 (JP)
(72) Inventor: SASAHARA, Kazufusa, Osaka-shi, Osaka 530-0001 (JP); MORI, Keiichi, Osaka-shi, Osaka 530-0001 (JP); OSHIMA, Hiroyuki, Osaka-shi, Osaka 530-0001 (JP)
(74) Representative: advotec.
(86) International application number: PCT/JP2023/021558
(87) International publication number: WO 2024/029200

(57) **Abstract**

The stretched film (10) includes a base layer (3) and a barrier layer (5). The base layer (3) contains, as a main component, polyethylene having a density of 0.950 g/cm³ or more. The barrier layer (5) contains, as a main component, an ethylene-vinyl alcohol copolymer. The stretched film has a water vapor transmission rate of 3.5 g/m²·day or less, and a thermal shrinkage in a stretching direction of the stretched film of 5% or less when heated at 100°C for 10 minutes.

## Description

### TECHNICAL FIELD

The present invention relates to a stretched film for use in a packing film and the like, and a method for producing the stretched film.

### BACKGROUND ART

For example, a stack including a base film made of a resin material and a sealant film made of a material different from the resin material for forming the base film, stacked on each other, has been employed as a packing film used in a pouch and the like.

Here, a reduction in environmental load is required for plastics in general, and recycling properties are also required for packing films. However, in the case of the above-described stack of films made of different materials, separation of the materials is difficult. Thus, recycling is difficult, which is a problem.

Therefore, in recent years, there has been a growing trend toward mono-materialization in which packing films are made of a single material. Examples of the resin used for the packing film as a mono-material include polyethylene, polypropylene, polyethylene terephthalate, etc. Among these, polyethylene is a material which is most frequently used in existing packing films and is particularly required to be mono-materialized. However, polyethylene alone is inferior in gas barrier properties (oxygen barrier property), and cannot be provided with a use-by date as in the known stacked films, and when the contents are cosmetics such as a detergent and shampoo, odor leakage occurs, which is a problem.

As a means for imparting gas barrier properties, a stretched film including a base layer containing, as a main component, a polyethylene-based resin and a barrier layer containing, as a main component, an ethylene-vinyl alcohol copolymer (EVOH) has been proposed, for example. Patent Document 1 indicates that with such a configuration, as in known stacked films, the stacked film can be provided with a barrier layer containing, as a main component, an ethylene-vinyl alcohol copolymer by a method such as a T-die and inflation molding, and thus, a stretched film having an oxygen barrier property imparted can be produced without increasing production facilities and production steps. Patent Document 1 further indicates that other layers (a base layer, a sealant film layer) are made of polyethylene to reduce the content of the ethylene-vinyl alcohol copolymer, and thus, the entire stack can be regarded as a single material of polyethylene, and that recycling properties can be improved (for example, see Patent Document 1).

### CITATION LIST

### PATENT DOCUMENT

Patent Document 1: Japanese Unexamined Patent Publication No. 2021-154656

### SUMMARY OF THE INVENTION

### TECHNICAL PROBLEM

The ethylene-vinyl alcohol copolymer has an oxygen barrier property, but does not have a water vapor barrier property. Further, it is also known that the oxygen barrier property of the ethylene-vinyl alcohol copolymer decreases under high humidity conditions. In the stretched film described in Patent Document 1, polyethylene having a density of 0.925 g/cm³ or more is disclosed as resin for forming a base layer. In the base layer, the water vapor barrier property is insufficient. In addition, the thermal shrinkage at 100°C is large, causing the base layer to shrink during heat sealing in bag making. This causes wrinkles and poor appearance. As a result, it has been difficult to achieve both water vapor barrier property and heat resistance.

The present invention was made in view of the above problems, and an object of the present invention is to provide a stretched film having excellent water vapor barrier property, heat resistance, and oxygen barrier property.

### SOLUTION TO THE PROBLEM

In order to achieve the above object, a stretched film of the present invention includes at least a first base layer and a barrier layer, the first base layer contains, as a main component, polyethylene having a density of 0.950 g/cm³ or more, and the barrier layer contains, as a main component, an ethylene-vinyl alcohol copolymer. The stretched film has a water vapor transmission rate of 3.5 g/m²·day or less and a thermal shrinkage in a stretching direction of the stretched film of 5% or less when heated at 100°C for 10 minutes.

A method for producing a stretched film of the present invention at least includes: preparing a raw film at least including a base layer containing, as a main component, polyethylene having a density of 0.950 g/cm³ or more and a barrier layer containing, as a main component, an ethylene-vinyl alcohol copolymer; and stretching the raw film, and in the stretching, a stretching temperature is equal to or higher than 80°C and lower than 130°C, and a stretch ratio is from 5 times to 10 times inclusive.

### ADVANTAGES OF THE INVENTION

According to the present invention, a stretched film having an excellent water vapor barrier property, heat resistance, and oxygen barrier property can be provided.

### BRIEF DESCRIPTION OF THE DRAWINGS

[FIG. 1] A sectional view of a stack using a stretched film according to a first embodiment of the present invention.
[FIG. 2] A plan view of a stack using the stretched film according to the first embodiment of the present invention.
[FIG. 3] A sectional view of a stack using a stretched film according to a second embodiment of the present invention.
[FIG. 4] A plan view of a stack using the stretched film according to the second embodiment of the present invention.

### DESCRIPTION OF EMBODIMENTS

The stretched film according to the present invention will be described in detail below. It should be noted that the present invention is not limited to the following embodiments and can be appropriately modified and applied without departing from the scope of the present invention.

### (First Embodiment)

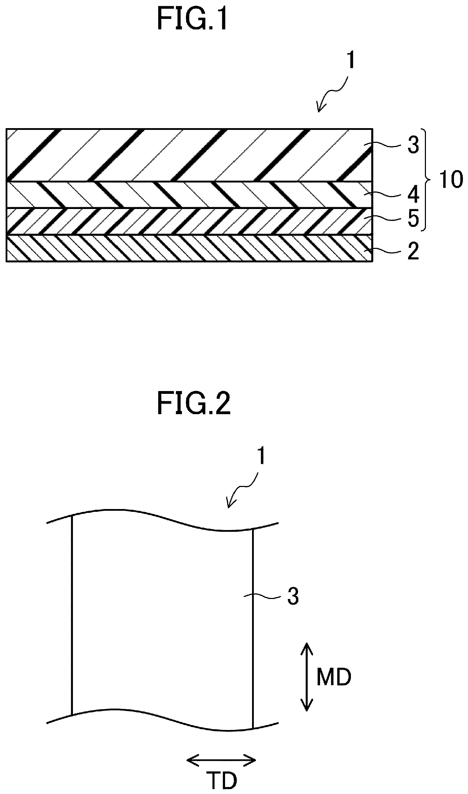

FIG. 1 is a sectional view of a stack using a stretched film according to a first embodiment of the present invention.

A stack 1 includes: a stretched film 10 including a base layer 3 containing, as a main component, polyethylene, and a barrier layer 5 containing, as a main component, an ethylene-vinyl alcohol copolymer and stacked on the base layer 3 via an adhesive layer 4; and a sealant film 2 stacked on the barrier layer 5 of the stretched film 10.

### <Sealant Film>

In view of mono-material, the sealant film 2 is preferably a polyethylene-based resin. More specific examples thereof include high-density polyethylene (HDPE), middle-density polyethylene (MDPE), low-density polyethylene (LDPE), linear low-density polyethylene (LLDPE), etc.

In view of improving heat-sealing property, the sealant film 2 is preferably low-density polyethylene (LDPE) or linear low-density polyethylene (LLDPE) each having a lower melting point than the base layer 3 in order to provide a melting point difference from the base layer 3.

The polyethylene content in the sealant film 2 is preferably 70% or more, more preferably 90% or more, yet more preferably 95% or more, most preferably 100%.

The sealant film 2 has a thickness of preferably 20 µm to 200 µm, more preferably 30 µm to 150 µm.

The sealant film 2 may contain other components than the polyethylene-based resin as long as the characteristics of the sealant film 2 are not impaired.

Examples of the other components include an olefin-based resin, an amide-based antiblocking agent (such as octadecanamide), a plasticizer, an ultraviolet absorber, an antioxidant, a weathering agent, an antistatic agent, a colorant, an anti-fogging agent, metal soap, wax, an antifungal agent, an antibacterial agent, a nucleating agent, a flame retardant, a lubricant, etc.

### <Base Layer (First Base Layer)>

The base layer 3 imparts a water vapor barrier property to the stretched film 10, and contains, as a main component, a high-density polyethylene (HDPE), and in the present invention, the high-density polyethylene has a density of 0.950 g/cm³ or more. When the density is 0.950 g/cm³ or more, crystallinity of polyethylene improves, thereby improving the water vapor barrier property.

In view of further improving the water vapor barrier property, the high-density polyethylene has a density of preferably more than 0.955 g/cm³, more preferably 0.962 g/cm³ or more, yet more preferably 0.970 g/cm³ or more.

The high-density polyethylene has a melt mass-flow rate (MFR) of preferably 0.01 g/10 min to 3.00 g/10 min, more preferably 0.02 g/10 min to 2.50 g/10 min, yet more preferably 0.1 g/10 min to 2.00 g/10 min. When the melt mass-flow rate (MFR) is 0.01 g/10 min or more, the high-density polyethylene can be molded with a general-purpose extruder without using special equipment, and when the melt mass-flow rate (MFR) is 3.00 g/10 min or less, the high-density polyethylene can have sufficient film strength.

The melt mass-flow rate can be obtained by measurement in accordance with JIS K 7210:1999.

In view of obtaining an excellent water vapor barrier property, the content of the high-density polyethylene in the entire base layer 3 is preferably 90 mass% or more, more preferably 95 mass% or more relative to 100 mass% of the base layer.

When the high-density polyethylene having a density of 0.950 g/cm³ or more is used as a resin for forming a base layer 3, the water vapor transmission rate per stretched film 10 is 3.5 g/m²·day or less. Accordingly, a stretched film 10 having an excellent water vapor barrier property can be provided.

In view of improving a water vapor barrier property, the water vapor transmission rate of the stretched film 10 is preferably 3.0 g/m²·day or less, more preferably 2.5 g/m²·day or less.

The "water vapor transmission rate" herein refers to a value measured using a water vapor transmission rate measurement device in accordance with JIS K 7129-1 under an atmosphere at a temperature of 40°C and a humidity of 90%.

The base layer 3 may further contain components other than the high-density polyethylene as long as stretchability of the stretched film is not impaired.

Examples of the other components include an olefin-based resin, an amide-based antiblocking agent (such as octadecanamide), a plasticizer, an ultraviolet absorber, an antioxidant, a weathering agent, an antistatic agent, a colorant, an anti-fogging agent, metal soap, wax, an antifungal agent, an antibacterial agent, a nucleating agent, a flame retardant, a lubricant, etc.

### <Barrier Layer>

The barrier layer 5 imparts an oxygen barrier property to the stretched film 10, and contains, as a main component, an ethylene-vinyl alcohol copolymer (EVOH).

The ethylene-vinyl alcohol copolymer used in the barrier layer 5 is not particularly limited, but the ethylene content (the content of ethylene unit) in the ethylene-vinyl alcohol copolymer is 30 mol% to 40 mol%, or 32 mol% to 38 mol% relative to the total amount (100 mol%) of all monomer units forming the ethylene-vinyl alcohol copolymer. This is because if the ethylene content is less than 30 mol%, the processability of the barrier film may decrease, and if the ethylene content is greater than 40 mol%, the oxygen barrier property may become insufficient.

In view of obtaining excellent oxygen barrier property, the content of the ethylene-vinyl alcohol copolymer relative to the entire barrier layer 5 is preferably 90 mass% or more, more preferably 95 mass% or more relative to 100 mass% of the barrier layer.

When the ethylene-vinyl alcohol copolymer is used as a resin for forming a barrier layer 5, the oxygen transmission rate of the stretched film 10 is 10 cc/m²·day or less. Accordingly, a stretched film 10 having an excellent oxygen barrier property can be provided.

In view of improving an oxygen barrier property, the oxygen transmission rate of the stretched film 10 is preferably 5.0 cc/m²·day or less, more preferably 3.0 cc/m²·day or less, yet more preferably 1.5 cc/m²·day or less.

The "oxygen transmission rate" herein refers to a value measured using an oxygen transmission rate measurement device in accordance with JIS K 7126-1 under an atmosphere at a temperature of 23°C and a humidity of 0%.

As in the case of the base layer 3, the barrier layer 5 may further contain other components (e.g., other components in the base layer 3 described above) than the ethylene-vinyl alcohol copolymer as long as stretchability of the stretched film is not impaired.

### <Adhesive Layer (First Adhesive Layer)>

The adhesive layer 4 adheres the base layer 3 and the barrier layer 5, and contains, as a main component, a material excellent in adhesion to the base layer 3 and the barrier layer 5, such as modified polyolefin.

Examples of the modified polyolefin include modified polyethylene and modified polypropylene. More specific examples thereof include acid-modified polyethylene and acid-modified polypropylene. In view of mono-material, the modified polyolefin is preferably modified polyethylene.

### <Method for Producing Stack>

Next, a method for producing a stack using the stretched film according to the present embodiment will be described in detail.

First, resin compositions used for a base layer, a barrier layer, and an adhesive layer are provided.

Next, the resin compositions for the respective layers are co-extruded at a predetermined temperature by using an extruder equipped with a T-die to obtain a raw film before stretching, including a base layer 3, an adhesive layer 4 on the surface of the base layer 3, and a barrier layer 5 on the surface of the adhesive layer 4.

Then, the raw film is uniaxially or biaxially stretched, thereby producing a stretched film 10 including a base layer 3, an adhesive layer 4, and a barrier layer 5 stacked in this order, the adhesive layer 4 being provided between the base layer 3 and the barrier layer 5, as illustrated in FIGS. 1 and 2. The method of the stretching is not particularly limited, and examples thereof include roll stretching, tenter stretching, or the like.

The uniaxial stretching refers to stretching performed in either one of a machine (longitudinal) direction (hereinafter referred to as "MD") or a direction orthogonal to MD (hereinafter referred to as "TD") of the film shown in FIG. 2. Biaxial stretching of the stretching in both MD and TD may also be performed.

The stretching temperature in the uniaxial stretching is equal to or higher than 80°C and less than 130°C, preferably from 100°C to 120°C inclusive. This is because if the stretching temperature is less than 80°C, the film may be opaque. If the stretching temperature is 130°C or higher, the film may melt and be ruptured.

The stretch ratio in the uniaxial stretching is from 5 times to 10 times inclusive. This is because an unstretched portion remains when the stretch ratio is less than 5 times, and tensile strength and transparency may thus decrease. This is also because the film may be ruptured when the stretch ratio is more than 10 times. In view of improving tensile strength and transparency and reducing rupture of the film, the stretch ratio is preferably from 6 times to 8 times inclusive.

The stretched film 10 produced by the stretching has a haze of 20% or less. Thus, excellent transparency can be obtained.

In view of further improving transparency, the stretched film 10 has a haze of preferably 15% or less, more preferably 10% or less, yet more preferably 7% or less.

The "haze" herein refers to an indicator of cloudiness measured in accordance with JIS K 7361.

The stretched film 10 according to the present embodiment has a thermal shrinkage in the film stretching direction of 5% or less when heated for 10 minutes at 100°C. If the thermal shrinkage is 5% or less, the dimensional stability in a heat treatment is high, and therefore, a stretched film having excellent heat resistance can be provided.

When the density of the high-density polyethylene, which is a main component of the base layer 3, becomes high, the melting point of the high-density polyethylene becomes high. Thus, an increase in thermal shrinkage can be reduced.

In view of improving a heat resistance, the thermal shrinkage of the stretched film 10 is preferably 3% or less, more preferably 1% or less.

The "thermal shrinkage" can be determined by the method described in Examples, which will be described later.

The stretched film 10 according to the present embodiment has a tensile rupture stress of preferably 100 MPa or more in at least one of MD or TD. If the tensile rupture stress is 100 MPa or more, the film has sufficient strength. Accordingly, a stretched film 10 which is dimensionally stable and excellent in transportability during transportation in subsequent steps, such as printing and laminating, can be provided.

In view of improving transparency by stretching, the tensile rupture stress of the stretched film 10 is preferably 200 MPa or more, more preferably 240 MPa or more.

The "tensile rupture stress" refers to a stress measured in accordance with JIS K 7127.

A raw film before the stretching has a thickness of preferably 50 µm to 400 µm, more preferably 80 µm to 300 µm. When the thickness of the raw film is 50 µm or more, the strength capable of withstanding the stress in the stretching can be obtained. When the thickness of the raw film is 400 µm or less, sufficient transparency can be obtained after the stretching.

A base layer after the stretching has a thickness of preferably 10 µm to 40 µm, more preferably 15 µm to 30 µm. If the thickness of the base layer 3 after the stretching is 10 µm or more, a strength and water vapor barrier property sufficient as a base film can be obtained. If the thickness of the base layer after the stretching is 40 µm or less, sufficient transparency can be obtained.

The thickness of the barrier layer 5 after the stretching is preferably 2 µm to 10 µm, more preferably 3 µm to 6 µm. If the thickness of the barrier layer 5 after the stretching is 2 µm or more, a strength and oxygen barrier property sufficient as a barrier film can be obtained. If the thickness of the barrier layer 5 after the stretching is 10 µm or less, a film excellent in recycling properties can be obtained.

The thickness of the adhesive layer 4 after the stretching is not particularly limited, and is preferably 0.3 µm to 2 µm, more preferably 0.5 µm to 1 µm.

In view of obtaining recycling properties, the polyethylene content relative to the entire stretched film 10 is preferably 70 mass% or more, more preferably 75 mass% or more relative to 100 mass% of the stretched film.

By the method described above, a stretched film 10 having an excellent water vapor barrier property, heat resistance, and oxygen barrier property can be obtained in this embodiment.

Next, a raw material containing a polyethylene-based resin such as high-density polyethylene (HDPE), middle-density polyethylene (MDPE), low-density polyethylene (LDPE), and linear low-density polyethylene (LLDPE) is prepared, and the raw material is molded into a film by melt extrusion using an extruder equipped with a T-die, thereby producing a sealant film 2.

Then, for example, the barrier layer 5 of the stretched film 10 and the sealant film 2 are stacked on each other via an adhesive, thereby producing a stack 1 shown in FIG. 1.

According to the guidelines of the European consortium "CEFLEX (Circular Economy for Flexible Packaging)," in the case where the polyethylene content in the entire stack is 90 mass% or more and an ethylene-vinyl alcohol copolymer and an adhesive are used, if the contents of the ethylene-vinyl alcohol copolymer and the adhesive are each less than 5 mass% in the entire stack, the stack is regarded as a mono-material. Therefore, the stretched film 10 with such a configuration can provide a stack 1 regarded as mono-material when the sealant film 2 is stacked on the stretched film 10.

### (Second Embodiment)

Next, the second embodiment of the present invention will be described. The same components as those of the first embodiment are denoted by the same reference numerals, and description thereof is omitted.

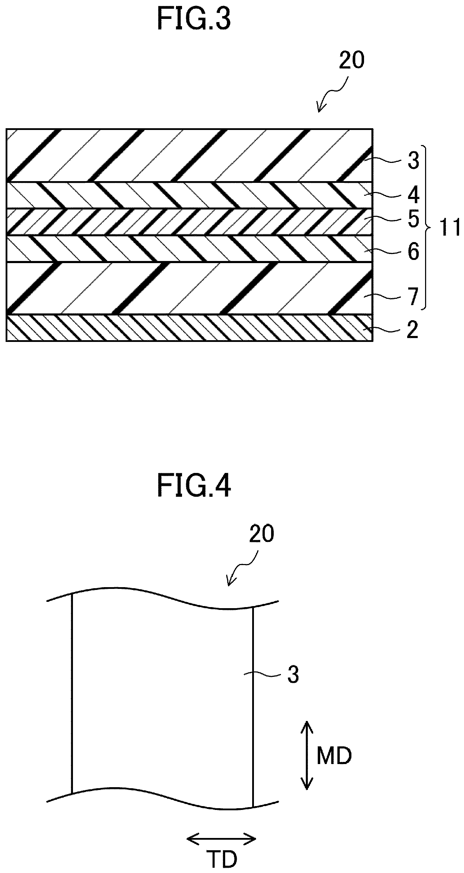

FIG. 3 is a sectional view of a stretched film according to the second embodiment of the present invention. As illustrated in FIG. 3, the stretched film 11 according to the present embodiment is characterized in that it further includes a base layer 7 stacked on a barrier layer 5 via an adhesive layer 6 in addition to a base layer 3 and the barrier layer 5 stacked on the base layer 3 via the adhesive layer 4 described in the first embodiment, i.e., two base layers are used.

As illustrated in FIG. 3, a stack 20 includes the stretched film 11 and a sealant film 2 stacked on the base layer 7 of the stretched film 11.

### <Base Layer (Second Base Layer)>

As in the base layer 3, the base layer 7 contains, as a main component, high-density polyethylene, and the high-density polyethylene has a density of 0.950 g/cm³ or more. This improves crystallinity of polyethylene. Thus, a water vapor barrier property can be improved as in the base layer 3.

As in the base layer 3, in view of further improving the water vapor barrier property, the high-density polyethylene has a density of preferably more than 0.955 g/cm³, more preferably 0.962 g/cm³ or more, yet more preferably 0.970 g/cm³ or more.

In view of allowing molding by a general-purpose extruder and having sufficient film strength, the high-density polyethylene has a melt mass-flow rate (MFR) of preferably 0.01 g/10 min to 3.00 g/10 min, more preferably 0.02 g/10 min to 2.50 g/10 min, yet more preferably 0.1 g/10 min to 2.00 g/10 min, as in the base layer 3.

As in the base layer 3, in view of obtaining an excellent water vapor barrier property, the content of the high-density polyethylene in the entire base layer 7 is preferably 90 mass% or more, more preferably 95 mass% or more relative to 100 mass% of the base layer.

As in the stretched film 10, the water vapor transmission rate of the stretched film 11 is 3.5 g/m²·day or less. However, in view of improving a water vapor barrier property, the water vapor transmission rate of the stretched film 11 is preferably 3.0 g/m²·day or less, more preferably 2.5 g/m²·day or less.

As in the base layer 3, the base layer 7 may further contain other components described above than the high-density polyethylene as long as stretchability of the stretched film is not impaired.

### <Adhesive Layer (Second Adhesive Layer)>

As in the adhesive layer 4, the adhesive layer 6 contains, as a main component, modified polyolefin.

### <Method for Producing Stack>

Next, a method for producing a stack using the stretched film according to the present embodiment will be described in detail.

In the same manner as in the first embodiment, for a stacked film 20 of the present embodiment, first, resin compositions used for a base layer, a barrier layer, and an adhesive layer are provided. Next, the resin compositions for the respective layers are co-extruded at a predetermined temperature by using an extruder equipped with a T-die to obtain a raw film before stretching, including a base layer 3, an adhesive layer 4 on the surface of the base layer 3, a barrier layer 5 on the surface of the adhesive layer 4, an adhesive layer 6 on the surface of the barrier layer 5, and a base layer 7 on the surface of the adhesive layer 6.

Then, the raw film is uniaxially stretched, thereby producing a stretched film 11 including a base layer 3, an adhesive layer 4, a barrier layer 5, an adhesive layer 6, and a base layer 7 stacked in this order, the adhesive layer 4 being provided between the base layer 3 and the barrier layer 5, and the adhesive layer 6 being provided between the barrier layer 5 and the base layer 7. The method of the stretching is not particularly limited, and examples thereof include roll stretching, tenter stretching, or the like.

The uniaxial stretching described above is stretching in one of MD or TD of the film shown in FIG. 4. Biaxial stretching of the stretching in both MD and TD may also be performed.

As in the first embodiment, the stretching temperature in the uniaxial stretching is equal to or higher than 80°C and less than 130°C, preferably from 100°C to 120°C inclusive, and the stretch ratio in the uniaxial stretching is from 5 times to 10 times inclusive, preferably from 6 times to 8 times inclusive.

The stretched film 11 produced by the above described stretching has a haze of 20% or less as in the stretched film 10. Thus, excellent transparency can be obtained.

In view of further improving transparency, the stretched film 11 has a haze of preferably 15% or less, more preferably 10% or less, yet more preferably 7% or less.

The stretched film 11 according to the present embodiment has a thermal shrinkage in the film stretching direction of 5% or less when heated for 10 minutes at 100°C, as in the stretched film 10. If the thermal shrinkage is 5% or less, the dimensional stability in a heat treatment is high, and therefore, a stretched film 11 having excellent heat resistance can be provided.

As in the base layer 3, when the density of the high-density polyethylene, which is a main component of the base layer 7, becomes high, the melting point of the high-density polyethylene becomes high. Thus, an increase in thermal shrinkage can be reduced.

In view of improving a heat resistance, the thermal shrinkage of the stretched film 11 is preferably 3% or less, more preferably 1% or less.

As in the stretched film 10, the stretched film 11 according to the present embodiment has a tensile rupture stress of preferably 100 MPa or more in at least one of MD or TD. When the tensile rupture stress is 100 MPa or more, the film has sufficient strength. Accordingly, a stretched film 11 which is dimensionally stable and excellent in transportability during transportation in subsequent steps, such as printing and laminating, can be provided.

In view of improving transparency, the tensile rupture stress of the stretched film 11 is preferably 200 MPa or more, more preferably 240 MPa or more.

The thickness of the raw film before the stretching, the thickness of the barrier layer 5 after the stretching, the thicknesses of the adhesive layers 4, 6 after the stretching are preferably the same as those in the first embodiment. The thickness of each of the base layer 3 and the base layer 7 is preferably 5 µm to 20 µm, more preferably 7 µm to 15 µm.

In view of obtaining recycling properties, the polyethylene content relative to the entire stretched film 11 is preferably 70 mass% or more, more preferably 75 mass% or more relative to 100 mass% of the stretched film.

By the method described above, a stretched film 11 having an excellent water vapor barrier property, heat resistance, and oxygen barrier property can be obtained in this embodiment.

Next, a raw material containing a polyethylene-based resin such as high-density polyethylene (HDPE), middle-density polyethylene (MDPE), low-density polyethylene (LDPE), and linear low-density polyethylene (LLDPE) is prepared, and the raw material is molded into a film by melt extrusion using an extruder equipped with a T-die, thereby producing a sealant film 2.

Then, for example, the base layer 7 of the stretched film 11 and the sealant film 2 are stacked on each other via an adhesive, thereby producing a stack 20 shown in FIG. 3. Further, as in the first embodiment, configuring the stretched film 11 as described above allows provision of a stack 20 regarded as mono-material when the sealant film 2 is stacked on the stretched film 11.

### [Examples]

The present disclosure will be described below based on Examples of the present invention. Note that the present invention shall not be limited to these Examples. These Examples may be modified and changed based on the intent of the present invention. Such a change and modification shall not be excluded from the scope of the present invention.

Materials used for production of the stretched film are shown below.
(1) HDPE 1: high-density polyethylene (density: 0.971 g/cm³, melting point: 134°C, MFR: 1.2 g/10 min, manufactured by Dow Chemical, trade name: ELITE AT 6900)
(2) HDPE 2: high-density polyethylene, (density: 0.962 g/cm³, melting point: 133°C, MFR: 0.24 g/10 min, manufactured by Prime Polymer Co., Ltd., trade name: HI-ZEX 520MB)
(3) HDPE 3: high-density polyethylene, (density: 0.958 g/cm³, melting point: 133°C, MFR: 0.98 g/10 min, manufactured by Prime Polymer Co., Ltd., trade name: HI-ZEX 3600F)
(4) HDPE 4: high-density polyethylene, (density: 0.950 g/cm³, melting point: 133°C, MFR: 0.3 g/10 min, manufactured by Prime Polymer Co., Ltd., trade name: HI-ZEX 6800S)
(5) HDPE 5: high-density polyethylene, (density: 0.943 g/cm³, melting point: 126°C, MFR: 0.24 g/10 min, manufactured by Prime Polymer Co., Ltd., trade name: HI-ZEX 5100E)
(6) EVOH1: ethylene-vinyl alcohol copolymer, (density: 1.16 g/cm³, melting point: 183°C, MFR: 2.0 g/10 min, ethylene content: 32 mol%, manufactured by KURARAY CO., LTD., trade name: EVAL SP 482B)
(7) EVOH2: ethylene-vinyl alcohol copolymer, (density: 1.18 g/cm³, melting point: 183°C, MFR: 1.7 g/10 min, ethylene content: 32 mol%, manufactured by KURARAY CO., LTD., trade name: EVAL J 171B)
(8) Adhesive: modified polyethylene (density: 0.91 g/cm³, melting point: 120°C, MFR: 2.3 g/10 min, manufactured by MITSUI CHEMICALS, INC., trade name: ADMER NF587)

### (Example 1)

### <Production of Stretched Film>

First, high-density polyethylene, an ethylene-vinyl alcohol copolymer, and modified polyethylene shown in Table 1 were provided.

Next, the resins provided were co-extruded at 200°C by using an extruder (manufactured by LABTECH) equipped with a T-die, thereby forming a film including a first base layer, a first adhesive layer on the surface of the first base layer, a barrier layer on the surface of the first adhesive layer, a second adhesive layer on the surface of the barrier layer, and a second base layer on the surface of the second adhesive layer. The film was then wound up by a winding roll, thereby obtaining a raw film before stretching, having a thickness shown in Table 1.

Subsequently, the raw film was uniaxially stretched in the MD at the stretching temperature and stretch ratio conditions shown in Table 1, thereby stretching the raw film to produce a stretched film having a thickness shown in Table 1.

### <Calculation of Polyethylene Content>

Next, products of the densities [g/cm³] of the respective materials and the thicknesses [µm] of the respective layers shown in Table 1 were calculated to obtain the weights [g/cm²] per unit area of the respective layers. Thus, the polyethylene content [mass%] relative to the entire stretched film produced was calculated. Table 1 shows the results.

In this Example, the sum of the weights per unit area of the first base layer and the second base layer both made of high-density polyethylene was 0.002709 [g/cm²], the weight per unit area of the barrier layer made of an ethylene-vinyl alcohol copolymer was 0.000661 [g/cm²], and the sum of the weights per unit area of the first adhesive layer and the second adhesive layer made of modified polyethylene was 0.000145 [g/cm²]. The polyethylene content [mass%] relative to the entire stretched film produced was thus 0.002709/(0.002709+0.000661+0.000145)=77.1 mass%.

### <Measurement of Water Vapor Transmission Rate>

Next, the water vapor transmission rate [g/m²·day] of the stretched film produced was measured using a water vapor transmission rate measurement device (manufactured by SYSTEC illinois, trade name: water vapor permeation analyzer, Lyssy L80-6000) in accordance with JIS K 7129-1 under an atmosphere at a temperature of 40°C and a humidity of 90%. Table 1 shows the results.

### <Measurement of Oxygen Transmission Rate>

The oxygen transmission rate [cc/m²·day] of the produced stretched film was measured by using a gas transmission rate measurement device (manufactured by GTR TEC Corporation, trade name: GTR-10XACT) in accordance with JIS K 7126-1 under an atmosphere at a temperature of 23°C and a humidity of 0%. Table 1 shows the results.

### <Measurement of Haze and Total Light Transmittance>

The haze [%] of the stretched film in the visible light region (360 nm to 750 nm) of polyethylene was measured as an indicator of cloudiness of the produced stretched film by using a spectrophotometer (manufactured by Suga Test Instruments Co., Ltd., trade name: haze meter HZ-V3) in accordance with JIS K 7361. Further, the total light transmittance [%] of the produced stretched film was measured in accordance with JIS K 7361-1. Table 1 shows the results.

### <Measurement of Tensile Rupture Stress>

The tensile rupture stress [MPa] of the produced stretched film was measured in accordance with JIS K 7127. More specifically, a test film of a dumbbell No. 3 test piece was provided, which was then subjected to a tensile test by using a tensile tester (manufactured by Shimadzu Corporation, trade name: autograph AG-5000A) under conditions at the temperature of 25°C and the tension speed of 100 mm/min, to measure the tensile rupture stress [MPa] in MD and TD. Table 1 shows the results.

### <Calculation of Thermal Shrinkage>

A sample having a predetermined size (7 cm × 7 cm) was cut out from the produced stretched film, orthogonal reference lines, each of which is parallel to the corresponding side of the sample and is 5 cm long, were marked on 1 cm inside from each side of the sample, and the sample was placed in an oven set at 100°C, heated for 10 minutes, then taken out, and cooled to room temperature. Then, the distance between the reference lines in the stretching direction (i.e., MD) was measured for the sample after the heating, and the thermal shrinkage [%] was calculated from the change in the distance between the reference lines in the stretching direction before and after the heating, by using the following equation (1), and used as an index of the heat resistance. Table 1 shows the results. Thermal shrinkage [%] in stretching direction = [(distance between reference lines before heating - distance between reference lines after heating)/distance between reference lines before heating] × 100

### (Examples 2 to 7 and Comparative Examples 1 to 4)

Each raw film having a thickness shown in Table 1 was stretched in the same manner as in Example 1 except that the composition (i.e., the high-density polyethylene, the ethylene-vinyl alcohol copolymer, and the modified polyethylene) of the stretched film and the conditions of the uniaxial stretching were changed to those shown in Table 1, thereby producing each stretched film.

In the same manner as in Example 1, the polyethylene content was calculated, the water vapor transmission rate, oxygen transmission rate, haze, total light transmittance, and tensile rupture stress were measured, and the thermal shrinkage was calculated. Tables 1 and 2 show the results.

In Comparative Example 4, the stretching temperature at the time when the film was formed by the uniaxial stretching was 130°C or more (it was 130°C). Thus, the stretched film was melted and ruptured. In Comparative Example 4, calculation of the polyethylene content, measurement of the water vapor transmission rate, oxygen transmission rate, haze, total light transmittance, and tensile rupture stress, and calculation of the thermal shrinkage could not be performed.

### (Comparative Example 5)

### <Production of Stretched Film>

First, high-density polyethylene shown in Table 2 was provided. Next, the high-density polyethylene provided was molded into a film by melt extrusion (extrusion temperature: 200°C) using an extruder (manufactured by NAGATA SEISAKUSYO CO.,LTD.) equipped with a T-die, and the resultant film was wound up by a winding roll, thereby obtaining a raw film before the stretching, having a thickness shown in Table 2.

Subsequently, the raw film was uniaxially stretched in the MD at the stretching temperature and stretch ratio shown in Table 2, thereby forming a stretched film (polyethylene film) made of the high-density polyethylene, having a thickness shown in Table 2.

In the same manner as in Example 1, the polyethylene content was calculated, the water vapor transmission rate, oxygen transmission rate, haze, total light transmittance, and tensile rupture stress were measured, and the thermal shrinkage was calculated. Table 1 shows the results.

**[Table 1]**

| | | | **Example 1** | **Example 2** | **Example 3** | **Example 4** | **Example 5** | **Example 6** | **Example 7** |
|---|---|---|---|---|---|---|---|---|---|
| **High-Density Polyethylene Used** | | | **HDPE1** | **HDPE1** | **HDPE1** | **HDPE2** | **HDPE3** | **HDPE4** | **HDPE1** |
| **Ethylene-Vinyl Alcohol Copolymer Used** | | | **EVOH1** | **EVOH1** | **EVOH2** | **EVOH2** | **EVOH2** | **EVOH2** | **EVOH2** |
| **Adhesive** | | | **Modified Polyethylene** | | | | | | |
| **Stretched** | **Stretching Direction** | | **MD** | **MD** | **MD** | **MD** | **MD** | **MD** | **MD** |
| | **Stretching Temperature [°C]** | | **120** | **120** | **120** | **120** | **120** | **120** | **100** |
| | **Stretch Ratio [-]** | | **5** | **8** | **7** | **5** | **5** | **5** | **5** |
| **Thickness [µm]** | **Raw Film** | | **150.2** | **150.2** | **150.2** | **149.9** | **150.2** | **151.2** | **150.2** |
| | **First Base Layer** | | **14.0** | **8.5** | **9.6** | **14.1** | **14.0** | **14.0** | **14.0** |
| | **First Adhesive Layer** | | **0.8** | **0.5** | **0.7** | **0.8** | **0.8** | **0.8** | **0.8** |
| | **Barrier Layer** | | **5.7** | **3.8** | **4.3** | **5.6** | **5.6** | **5.7** | **5.5** |
| | **Second Adhesive Layer** | | **0.8** | **0.5** | **0.6** | **0.8** | **0.8** | **0.7** | **0.8** |
| | **Second Base Layer** | | **13.9** | **8.6** | **9.1** | **14.1** | **14.0** | **14.1** | **14.1** |
| | **Entire Stretched Film** | | **35.1** | **21.8** | **24.3** | **35.3** | **35.1** | **35.3** | **35.1** |
| **Evaluations** | **Polyethylene Content [mass%]** | | **77.1** | **75.7** | **74.4** | **77.2** | **77.0** | **76.7** | **77.4** |
| | **Water Vapor Transmission Rate [g/m²·day]** | | **2.06** | **2.69** | **2.57** | **2.27** | **2.39** | **2.52** | **1.93** |
| | **Oxygen Transmission Rate [cc/m²·day]** | | **1.42** | **3.21** | **1.65** | **1.48** | **1.44** | **1.42** | **1.42** |
| | **Haze [%]** | | **8.5** | **5.3** | **6.1** | **18.4** | **6.9** | **9.0** | **9.7** |
| | **Total Light Transmittance [%]** | | **90.7** | **90.7** | **90.8** | **90.6** | **91.0** | **90.5** | **90.1** |
| | **Tensile Rupture Stress [MPa]** | **MD** | **288** | **359** | **298** | **290** | **303** | **245** | **295** |
| | | **TD** | **46** | **44** | **50** | **53** | **52** | **41** | **47** |
| | **Thermal Shrinkage [%] in Stretching Direction** | | **2.0** | **0.2** | **0.5** | **2.2** | **2.8** | **3.4** | **4.8** |

**[Table 2]**

| | | | **Comparative Example 1** | **Comparative Example 2** | **Comparative Example 3** | **Comparative Example 4** | **Comparative Example 5** |
|---|---|---|---|---|---|---|---|
| **High-Density Polyethylene Used** | | | **HDPE5** | **HDPE5** | **HDPE1** | **HDPE1** | **HDPE1** |
| **Ethylene-Vinyl Alcohol Copolymer Used** | | | **EVOH2** | **EVOH2** | **EVOH1** | **EVOH1** | **-** |
| **Adhesive** | | | **Modified Polyethylene** | | | | **-** |
| **Stretched** | **Stretching Direction** | | **MD** | **MD** | **MD** | **MD** | **MD** |
| | **Stretching Temperature [°C]** | | **110** | **120** | **70** | **130** | **120** |
| | **Stretch Ratio [-]** | | **5** | **5** | **5** | **5** | **5** |
| **Thickness [µm]** | **Raw Film** | | **154.1** | **154.1** | **150.2** | **150.2** | **150** |
| | **First Base Layer** | | **14.1** | **14.1** | **14.0** | **-** | **34.9** |
| | **First Adhesive Layer** | | **0.8** | **0.8** | **0.7** | **-** | **-** |
| | **Barrier Layer** | | **5.8** | **5.8** | **5.7** | **-** | **-** |
| | **Second Adhesive Layer** | | **0.8** | **0.8** | **0.7** | **-** | **-** |
| | **Second Base Layer** | | **14.1** | **14.2** | **14.1** | **-** | **-** |
| | **Entire Stretched Film** | | **35.5** | **35.6** | **35.2** | **-** | **34.9** |
| **Evaluations** | **Polyethylene Content [mass%]** | | **76.2** | **76.3** | **77.6** | **-** | **100** |
| | **Water Vapor Transmission Rate [g/m²·day]** | | **3.69** | **4.94** | **2.10** | **-** | **1.60** |
| | **Oxygen Transmission Rate [cc/m²·day]** | | **1.97** | **2.81** | **1.42** | **-** | **8464.18** |
| | **Haze [%]** | | **15.6** | **12.1** | **70.8** | **-** | **9.6** |
| | **Total Light Transmittance [%]** | | **90.7** | **91.0** | **69.2** | **-** | **91.1** |
| | **Tensile Rupture Stress [MPa]** | **MD** | **216** | **209** | **267** | **-** | **336** |
| | | **TD** | **36** | **32** | **39** | **-** | **23** |
| | **Thermal Shrinkage [%] in Stretching Direction** | | **10.7** | **5.5** | **11.1** | **-** | **2.1** |

As can be seen from Table 1, in the stretched films of Examples 1 to 7, the density of polyethylene is 0.950 g/cm³ or more, the water vapor transmission rate is 3.5 g/m²·day or less, and the oxygen transmission rate is 10 cc/m²·day or less. It is thus found that the stretched films have an excellent water vapor barrier property and oxygen barrier property. Further, the thermal shrinkage when the stretched films were heated at 100°C for 10 minutes in the film stretching direction is 5% or less. It is thus found that the stretched films have high dimensional stability after the thermal treatment and excellent heat resistance. Further, the haze is 20% or less. It is thus found that the stretched film has excellent transparency.

As can be seen from Table 2, in the stretched films of Comparative Examples 1 and 2, the density of polyethylene is less than 0.950 g/cm³. It is thus found that the water vapor transmission rate exceeds 3.5 g/m²·day and that the stretched films have poor water vapor barrier property. Further, the density of polyethylene is less than 0.950 g/cm³, and the melting point of the polyethylene is low. It is thus found that the thermal shrinkage exceeds 5% and that the heat resistance is poor.

In the stretched film of Comparative Example 3, the stretching temperature is low, and the effect of heat fixation cannot be exhibited. It is thus found that the thermal shrinkage exceeds 5% and that the heat resistance is poor. Further, the stretching temperature is less than 80°C. Thus, the film is opaque, and the haze is considerably higher than 20%. It is thus found that the transparency is poor.

The stretched film of Comparative Example 5 does not include a barrier layer made of ethylene-vinyl alcohol copolymer. Thus, the oxygen transmission rate becomes considerably larger than 20 cc/m²·day. It is thus found that oxygen barrier property is poor.

### INDUSTRIAL APPLICABILITY

As can be seen from above, the present invention is suitable for a stretched film used in a packing film and the like, and a method for producing the stretched film.

### DESCRIPTION OF REFERENCE CHARACTERS

- 1: Stack
- 2: Sealant Film
- 3: Base Layer (First Base Layer)
- 4: Adhesive Layer (First Adhesive Layer)
- 5: Barrier Layer
- 6: Adhesive Layer (Second Adhesive Layer)
- 7: Base Layer (Second Base Layer)
- 10: Stretched Film
- 11: Stretched Film
- 20: Stack

## Claims

1. A stretched film comprising at least a first base layer and a barrier layer,
the first base layer containing, as a main component, polyethylene having a density of 0.950 g/cm³ or more,
the barrier layer containing, as a main component, an ethylene-vinyl alcohol copolymer,
the stretched film having a water vapor transmission rate of 3.5 g/m²·day or less and
a thermal shrinkage in a stretching direction of the stretched film of 5% or less when the stretched film is heated at 100°C for 10 minutes.

2. The stretched film of claim 1, wherein a first adhesive layer is provided between the first base layer and the barrier layer.

3. The stretched film of claim 2, further comprising a second base layer, wherein
the second base layer contains, as a main component, polyethylene having a density of 0.950 g/cm³ or more, and
a second adhesive layer is provided between the barrier layer and the second base layer.

4. A method for producing a stretched film, the method at least comprising: preparing a raw film at least including a base layer containing, as a main component, polyethylene having a density of 0.950 g/cm³ or more and a barrier layer containing, as a main component, an ethylene-vinyl alcohol copolymer; and
stretching the raw film, wherein
in the stretching, a stretching temperature is equal to or higher than 80°C and lower than 130°C, and a stretch ratio is from 5 times to 10 times inclusive.
